# EUROPÄISCHE PATENTANMELDUNG

(11) **EP 1 310 776 A2**
(43) Veröffentlichungstag der Anmeldung: **14.05.2003**
(21) Anmeldenummer: 02450256.9
(22) Anmeldetag: 07.11.2002
(51) Int. Cl.: G01F 9/00, G01F 23/68

(54) **System zur Überwachung von Fahrzeugtanks**

(30) Priorität: 13.11.2001 AT 17812001
(71) Anmelder: Kreindl Andreas, 4040 Linz (AT)
(72) Erfinder: Kreindl Andreas, 4040 Linz (AT)
(74) Vertreter: Hübscher, Heiner, Dipl.-Ing.

(57) **Zusammenfassung**

Ein System zur Überwachung von Fahrzeugtanks für flüssigen Kraftstoff, besteht aus einer Erfassungseinheit (1) am Tank und einer gesonderten Auswertungseinheit (2), wobei die Erfassungseinheit Sensoren (8, 9) zur Erzeugung entsprechender Meßsignale, einen Schaltkreis (4) zur Erfassung dieser Meßsignale und der Zeitsignale einer Zeitbasis und einen vom Schaltkreis beaufschlagten Speicher (5) zur zeit- und/oder ereignisabhängigen Speicherung der aus den Meß- bzw. Eingangssignalen erzeugten Daten sowie eine Ausgabeschnittstelle (3) umfaßt und die Auswertungseinheit (2) Ausleseeinheit für den Speicher (5, 6) die Daten erfaßt und nach entsprechenden Programmen auswertet, um z. B. Verbrauch über definierte Zeiträume, Nachfüll- oder Entnahmemengen, Zeitpunkt der Betankung oder Entnahme, Standzeiten des Fahrzeuges, Betriebszeiten im Leerlauf usw. festzustellen und zu dokumentieren. Die Erfassungseinheit (1) bildet mit den Sensoren (8, 9), von denen wenigstens einer ein Füllstandsfühler (8) mit Digitalausgang ist, ein autarkes System mit Eigenversorgung und der Schaltkreis (4 - 7) formt aus den von den Sensoren (8, 9) erfaßten Signalen Rohdaten für den Speicher 5. Den Rohdaten zum Erhalt der tatsächlichen Meßwerte zuzuordnende Korrekturdaten werden in einem Eichvorgang erzeugt und in einem Korrekturspeicher (12) zur ausschließlichen Verwendung bei der Auswertung festgehalten.

## Beschreibung

Die Erfindung bezieht sich auf ein System zur Überwachung von Fahrzeugtanks für flüssigen Kraftstoff gemäß dem Oberbegriff des Patentanspruches 1. Die Erfindung betrifft auch einen für das System besonderes geeigneten Füllstandsfühler sowie ein Verfahren zur Datenverarbeitung bei diesem System.

Ein derartiges System soll eine zuverlässige Überwachung des Kraftstoffverbrauches, der Betankungsfüllmengen, allfälliger unzulässiger Kraftstoffentnahmen sowie der jeweiligen Betankungs- und Entnahmezeiten, im weiteren Sinn auch der Betriebszeiten, Standzeiten usw. ermöglichen und dabei auch Daten für eine nachträgliche Kontrolle und Dokumentation in wenigstens einer Zentrale liefern. Verwendungsgebiete für derartige Überwachungssysteme sind Transportunternehmen mit Lastkraftwägen sowie Taxiunternehmungen, andere Firmenfahrzeuge, Baumaschinen usw.

Ein einschlägiges System ist aus der DE 195 37 024 C2 bekannt. Dabei wird der üblicherweise am Tank eines Fahrzeuges vorhandene Füllstandsfühler, nämlich hier ein an eine Konstantstromquelle angeschlossener Widerstandssensor verwendet, bei dem die Ausgangsspannung eine dem Tankinhalt proportionale Spannung für den Meßeingang der Erfassungseinheit liefert. Dieses Meßsignal muß umgewandelt, mit den Signalen weiterer Eingänge, insbesondere von Eingängen für die momentane Temperatur und den Druck modifiziert und schließlich zu speicherfähigen Daten aufbereitet werden, wobei im wesentlichen eine Mittelwertbildung stattfindet und daher im wesentlichen auch nur den durchschnittlichen Verbrauch bzw. die durchschnittliche Entnahme angebende Signale als Rohsignale für die Weiterverarbeitung gespeichert werden. Die Messung und Speicherung erfolgt grundsätzlich periodisch - zeitabhängig, was bedeutet, daß im System große Speichereinheiten vorhanden sein müssen, wobei überdies die Auslesung und Auswertung der Signale ebenfalls zeitaufwendig ist und für die Erfassung rascher Änderungen des Füllstandes, wie sie bei der Betankung oder einer Kraftstoffentnahme auftreten, besondere Erkennungsstufen in der Auswertungseinheit geschaltet werden müssen. Abgesehen davon ist das System zu einem großen Teil mit den ohnehin am Fahrzeug vorhandenen Sensoren vernetzt, so daß hier Fehler bzw. Beeinflussungen auftreten können. Entscheidend ist überdies, daß das Erfassungssystem an die vorhandenen Überwachungseinheiten des Fahrzeuges selbst, insbesondere die Charakterisitik des Füllstandsfühlers angepaßt werden muß, so daß es möglichst von Haus aus mit den notwendigen Anzeige- und Erfassungssystemen des Fahrzeuges eingebaut werden muß und eine Nachrüstung vorhandener Fahrzeuge mit dem entsprechenden System kaum bzw. nur unter erheblichem Aufwand für Einbau und Anpassung an die Fahrzeugsysteme möglich erscheint. Gleiche Schwierigkeiten ergeben sich in der Anpassung einer Auswertungseinheit, wenn in den zu überwachenden Fahrzeugen verschiedene Signalgeber vorhanden sind, deren Signale als Rohdaten erfaßt und ausgewertet werden sollen. Wegen der Verwendung fahrzeugeigener Signalgeber, die auch mit den Anzeigeeinheiten des Fahrzeuges selbst in Verbindung stehen können, sind zusätzliche Möglichkeiten für eine Fremdbeeinflussung oder für das Einschleppen von Meß- und Auswertungsfehlern vorhanden. Durch das analoge Meßverfahren und die damit verbundenen analogen Signalwege entstehen außerdem zusätzliche Meßfehler, insbesondere dann, wenn die zur digitalen Umwandlung vorgesehene Einrichtung über längere Verbindungskabel und notwendige Steckersysteme verbunden werden muß.

Aus der EP 0 939 306 A ist ein Überwachungssystem für Fahrzeugtanks bekannt, bei dem im Fahrzeug bereits alle Signale zu Meßsignalen aufbereitet, gegebenenfalls im Fahrzeug selbst für entsprechende Anzeigen verwendet und zusätzlich auf entnehmbaren Datenträgern aufgezeichnet werden, die an zentrale Auswertungseinheiten ähnlich wie die sonst üblichen Fahrtenschreiber übergeben werden können. Hier ist die gesamte Auswertung und Eichung Teil des fahrzeugeigenen Systems, welches daher entsprechend aufwendig und überdies individuell an das jeweilige Fahrzeug angepaßt aufgebaut sein muß.

Zu erwähnen ist noch, daß es eine Reihe einfacher Systeme gibt, um die mißbräuchliche Entwendung von Treibstoff zu dokumentieren, wobei der Füllstand im Tank periodisch gemessen und die gemessene Füllstandsmenge gespeichert wird. Beispiel hiefür ist ein System nach der EP 0 259 923 A1. Weitere Systeme, die für Anzeigen im Fahrzeug selbst verwendet werden, ermöglichen Anzeigen des momentanen Treibstoffverbrauches, wobei die Füllstandsänderung in Abhängigkeit von den Signalen eines Geschwindigkeitssensors ausgewertet wird.

Die meisten verwendeten Füllstandsfühler sind entweder nicht hinreichend genau, störungsanfällig oder sehr aufwendig in der gesamten Ausstattung bzw. zusätzlichen Meßanordnung. Bei Schleifdrahtgebern gemäß der DE 1 219 246 A oder DE 1 263 332 A führen Durchmessertoleranzen des Schleifdrahtes zu Linearitätsfehlern des Widerstandsausgangswertes und zu Temperaturfehlern. Auch ein instabiler Übergangswiderstand an den Kontaktflächen und Beeinflussungen des analogen Signalweges vom Sensor zur Auswerteeinheit führen zu weiteren Meßfehlern. Ein unstetiger Widerstandsausgang wird bei Widerstandsketten mit Schaltern, die z. B. von einem Schwimmermagneten betätigt werden, erzielt. Ausführungsbeispiele entnimmt man der EP 0 844 459 A und der US 6 408 692 A, wobei die Auflösung von der Schalteranzahl abhängt und bei hoher Auflösung viele Schalter mit entsprechend hohen Kosten notwendig werden. Eine Digitalisierung kann bei solchen Ausführungen zuverlässige und absolute Ausgangswerte liefern, erfordert aber auch eine hohe Auflösung bei der Umwandlung der analogen Spannungswerte in Schaltschritte und zuordenbare Digitalwerte. Bei Sensoren mit analoger Meßgröße muß für jeden Sensor ein Bezugspunkt kalibriert werden, da sonst Korrekturwerte, z. B. Temperaturkorrekturen, nicht für eine größere Anzahl von Fühlereinheiten übernommen werden können.

Elektronische Füllstandsmeßverfahren sind beispielsweise in Form von kapazitiven und induktiven Verfahren bzw. durch Verfahren der Ultraschalllängenmessung und magnetostriktive Längenmeßverfahren realisiert. Sie haben eine höhere Genauigkeit und ermöglichen zugleich mit relativ einfachen Mitteln eine Temperaturkompensation, wodurch die Auswertungseinheit entlastet wird. Nachteilig bei allen Verfahren und Füllstandsfühlern ist, daß meist nicht immer bis zu höchsten Stelle des Behältersystems gemessen werden kann, was bei Überfüllung von Kraftstoffbehältern und allfälligem Überlauf nachteilig ist. Der Grund für diesen Nachteil besteht u. a. darin, daß die Fühler entweder nicht an der höchsten Stelle des Systems angebracht bzw. bei Schwimmern nicht bis zu höchsten Stelle abgetastet werden können oder bei Ultraschallmeßverfahren ein Mindestabstand zwischen Fühler und Flüssigkeitsoberfläche einzuhalten ist.

Aufgabe der Erfindung ist es, ein System der eingangs genannten Art so zu verbessern, daß es möglichst ohne Eingriff und ohne Verbindung mit fahrzeugeigenen Sensoren eingesetzt werden kann, an unterschiedliche Fahrzeuge und Fahrzeuge mit unterschiedlichem Tank anpaßbar ist und trotzdem bei gegenüber bekannten Systemen wesentlich verringertem Schaltungsaufwand und verringerter Speicherkapazität genaue, leicht auswertbare Rohdaten für die Weiterverarbeitung in der Auswertungseinheit liefert und weitgehend gegen Fremdmanipulationen gesichert werden kann. Eine Teilaufgabe der Erfindung besteht in der Schaffung eines für das System besonders geeigneten Füllstandsfühlers und der Angabe eines neuen Speicherverfahrens für die Signalauswertung in dem System.

Die gestellte Hauptaufgabe wird durch die Merkmale des Anspruches 1 gelöst.

Da es sich um ein autarkes System bei der Erfassungseinheit handelt, ist das System weitgehend von Beeinflussungen durch fahrzeugeigene Meß- und Auswertungseinrichtungen geschützt. Der entscheidene Vorteil ergibt sich aber daraus, daß das autarke System im wesentlichen unabhängig von den fahrzeugeigenen Sensoren und Meß- bzw. Auswertungseinheiten auch nachträglich in vorhadene Fahrzeuge eingebaut werden kann, wobei gleiche Systeme der Erfassungseinheit für unterschiedliche Fahrzeuge Verwendung finden und die gespeicherten Werte erst mit den Korrekturdaten zu brauchbaren Meß- bzw. Überwachungsdaten werden. Es ist sogar eine Verschlüsselung der auszugebenden Daten möglich, die dann nur von einem entsprechend codierten Empfänger in auswertbarer Form empfangen werden können. Eine Datenausgabe ist sowohl über Ansteckkabel als auch über drahtlose Verbindungen, z. B. Funkverbindungen möglich. Der Einsatz von Füllstandsfühlern mit Digitalausgang vereinfacht die Speicherung und insbesondere eine allfällige Durchführung eines Vergleiches aufeinanderfolgender Daten bzw. eine Korrektur der zu speichernden Daten aufgrund der von anderen Sensoren erfaßten Zustandsänderungen im Umfeld, z. B. von Änderungen des Druckes, der Temperatur oder der Momentanlage des Fahrzeuges gegenüber einer gedachten Bezugsebene.

Bei der Anwendung des erfindungsgemäßen Systems ist auch eine Anpassung an individuelle Forderungen des Betreibers eines Fuhrparkes od. dgl. möglich. Wenn beispielsweise ein Großspediteur nur eine Zentrale betreibt, so ist eine Ausbildung nach Anspruch 2 vorzuziehen, bei der die Speicherplätze gesondert gesichert sind. Wenn der Großspediteur aber zwei oder mehrere Zentralen betreibt und in jeder dieser Zentralen eine Auswertung der von der Erfassungseinheit der Fahrzeuge gelieferten Daten erfolgen soll, dann kann man zwar die Zentralen untereinander vernetzen, es ist aber dann einfacher, wenn eine Ausführung nach Anspruch 3 gewählt wird. Durch die schon erwähnte Verschlüsselung kann auch hier eine weitgehende Sicherung gegen unbefugten Zugriff erzielt werden.

In den Ansprüchen 4 - 9 sind vorteilhafte Ausgestaltungen bzw. Anordnungen der Meßeinrichtung, insbesondere des Füllstandsfühlers, angegeben, die sich besonders für die Anwendung im gegenständlichen System eignen, aber auch unter Verwendung entsprechender Verwertungsschaltungen als normale Füllstandsfühler im Kraftfahrzeug verwendbar sind.

Dabei wird durch eine Ausgestaltung gemäß Anspruch 4 unabhängig vom verwendeten digitalen Meßsystem erreicht, daß sich Flüssigkeitsbewegungen nicht oder nur wenig stark auf die Elemente des Füllstandsfühlers auswirken und dieser auch vor Beschädigungen geschützt wird. Eine Messung ist bis zur höchsten Füllhöhe und auch bei Überfüllungen des Tanks möglich. Eine vorteilhafte Ausgestaltung des Füllstandsfühlers ist in Anspruch 5 angegeben, wobei eine leichte Einbaubarkeit und genaue Führung durch die Ausführung nach Anspruch 6 gewährleistet wird. Vorteilhaft, aber nicht unbedingt notwendig kann für den Füllstandsfühler die Ausführung nach Anspruch 7 gewählt werden, bei der mit relativ einfachen Mitteln und wenig Bauteilen eine hohe, von der Anzahl der parallelen Bits abhängige Auflösung erzielbar ist, wobei schon 10 Bit eine Auflösung von 1 : 1024 ergeben. Um einen zuverlässigen Kontakt zwischen der Leiterplatte und den Kontaktelementen zu erzielen, werden vorteilhaft leiterplattenseitig Beschichtungen aus leitfähigem Polymer verwendet, um elektrochemische Korrosionseffekte zu verhindern. Durch die Ausführung nach Anspruch 8 wird gleichzeitig eine bleibende Temperaturkorrektur der ausgegebenen Meßwerte ermöglicht.

Eine für die nachträgliche Montage, aber auch bei neuen Tanks vorteilhafte Ausbildung entnimmt man dem Anspruch 9. Dabei können im Haltekopf auch Teile der Erfassungs- bzw. der Erfassungs- und Auswertungseinheit untergebracht werden.

Wie vorstehend schon erwähnt wurde, soll beim erfindungsgemäßen System trotz genauer Erfassung der notwendigen Daten gegenüber den bekannten Systemen eine weitgehende Reduktion der notwendigen Speicherkapazität erzielt und dabei trotzdem eine teilweise aussagekräftigere Datenaufzeichnung bzw. -auswertung ermöglicht werden. Um dies zu erreichen, wird in Weiterbildung der Erfindung ein Verfahren gemäß Anspruch 10 vorgeschlagen.

Die tatsächlich gespeicherten Meßdaten sind durch ihren Eigenwert und den Zeitpunkt der Aufzeichnung eindeutig definiert, so daß bei Übersetzung der Speicherergebnisse in eine Graphik ein Diagramm mit von den Meßpunkten bestimmten Eckpunkten eines aus geraden Linienabschnitten bestehenden Linienzuges entsteht, wobei trotzdem eine hohe Meßgenauigkeit erzielt wird. Besonders Betankungs- oder Entnahmezustände unterscheiden sich hinsichtlich der Steilheit des Verlaufes wesentlich von den Zuständen bei normalem Fahroder Leerlaufbetrieb. Da nur die Meßpunkte zu speichern sind, ergibt sich für Ruhezeiten und etwa gleichbleibende Betriebsverhältnisse ein äußerst geringer notwendiger Speicheraufwand. Zur weitgehenden Anpassung an die tatsächlichen Verhältnisse kann man etwa beim Fahrbetrieb Toleranzwerte vorgeben, die die Schwankungen des Flüssigkeitsspiegels im Tank durch die Fahrerschütterungen berücksichtigen. Diese Toleranzwerte können bei stehendem Fahrzeug entsprechend reduziert werden. Werden die Toleranzwerte nacheinander nur in einer Richtung überschritten, so ist das ein Anzeichen dafür, daß die Messung nicht mehr hinreichend genau ist oder sein könnte. Um hier eine Kompensation zu schaffen, wird eine Wei terbildung des erfindungsgemäßen Verfahrens gemäß Anspruch 11 gewählt.

Beim Neueinbau des erfindungsgemäßen Systems wird selbstverständlich angestrebt, die notwendigen Korrekturdaten möglichst rasch und mit geringem Aufwand zu erhalten. Um dies zu erreichen, wird gemäß Anspruch 12 vorgegangen.

Besonders bei nachträglichem Einbau kann es notwendig bzw. zweckmäßig sein, den Füllstandsfühler des erfindungsgemäßen Systems an einer sich vom Tankaufbau her anbietenden Stelle anzubringen. Hier können in manchen Fällen Ungenauigkeiten auftreten. Um diese zu kompensieren, wird gemäß Anspruch 13 vorgegangen.

Weitere Vorteile des Erfindungsgegenstandes entnimmt man der nachfolgenden Zeichnungsbeschreibung. In der Zeichnung ist der Erfindungsgegenstand beispielsweise dargestellt. Es zeigen
- Fig. 1: ein vereinfachtes Blockschaltschema eines erfindungsgemäßen Systems,
- Fig. 2: in graphischer Darstellung den Algorithmus zur Datenkomprimierung und --filterung,
- Fig. 3: in teilweise schematisierter Darstellungsweise einen in einen Tank eingebauten Füllstandsfühler im Längsschnitt und die
- Fig. 4 und 5: Querschnittsdarstellungen zu Fig. 3.

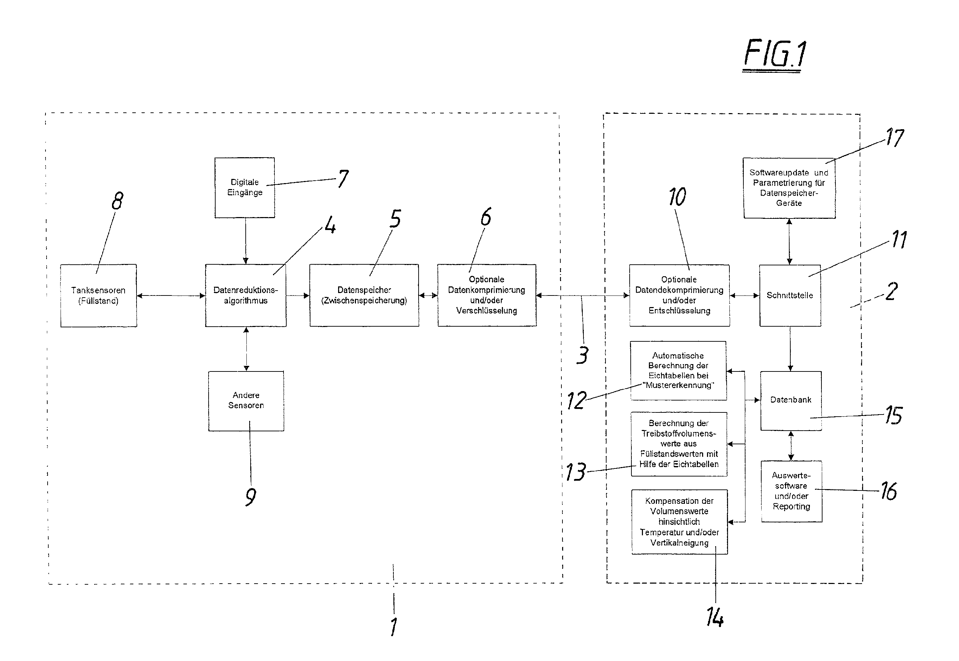

Nach Fig. 1 besteht das erfindungsgemäße System aus einer Erfassungseinheit 1 im Fahrzeug oder sonstigen Gerät, bei dem die Füllstandsmenge eines Tanks zu überwachen ist, und wenigstens einer meist ortsfesten Auswertungseinheit 2 ,die mit der Erfassungseinheit 1 über eine durch einen Doppelpfeil eingezeichnete Verbindung 3, die eine Leitungsverbindung mit Steckern oder auch eine Funkverbindung sein kann, sowie über geeignete, nicht dargestellte Schnittstellenelemente gekuppelt werden kann.

Die wesentlichen Funktionen der einzelnen Elemente der Erfassungseinheit 1 und der Auswertungseinheit 2 wurden in den Blöcken des Schaltschemas angegeben. Die Erfassungseinheit umfaßt in einfachster Form eine nicht dargestellte eigene Batterie bzw. einen Anschluß für die Fahrzeugbatterie für die Eigenversorgung, einen Mikroprozessor 4, dem ein Datenspeicher 5 und optional eine gegebenenfalls in ihn integrierte Einheit 6 zur Datenkomprimierung und/oder -verschlüsselung zugeordnet sind, der über digitale Eingänge 7 programmiert werden kann und Eingänge für einen oder mehrere Füllstandsfühler 8 sowie weitere Sensoren 9 aufweist, wobei die letzteren Eingänge nur im Bedarfsfall und je nach Aufwendigkeit bzw. gewünschter Aussagekraft besetzt sein können und u. a. Anschlüsse für Neigungssensoren um die Längs- und/oder Querachse Sensoren zur Erfassung des momentanen Motorbetriebes oder - nichtbetriebes, der Fahrgeschwindigkeit usw. in Frage kommen. Ferner besitzt der Mikroprozessor 4 eine in ihm integrierte Zeitbasis. Es sollte auch die Möglichkeit bestehen, aktuelle Daten aus einem zentralen Bordrechner, der bei modernen Fahrzeugen meist üblich ist, auszulesen.

Als Füllstandsfühler 8 werden bevorzugt Sensoren mit digitalem Ausgang verwendet, die meist nachträglich in vorhandene Tanks eingebaut werden und entsprechend der momentanen Füllstandshöhe digitale Signale an den Mikroprozessor 4 abgeben. Dabei handelt es sich um Digitalsignale, deren Höhe zwar vom Füllstand abhängt und mit diesem korrelieren, die aber bei unterschiedlichen Tanks unterschiedliche Werte bedeuten können und in jedem Fall noch aufgrund der Tankcharaktrisitik erst gemeinsam mit tankspezifischen Korrekturdaten tatsächliche Meßergebnisse liefern. Diese Korrekturdaten sind, wie noch zu beschreiben sein wird, beim Ausführungsbeispiel in der Auswertungseinheit 2 fahrzeugspezifisch gespeichert, können aber bei einer Variante (Abfragemöglichkeit an mehreren Zentralen) auch auf einem gesonderten Speicher bzw. Speicherplatz in der Erfassungseinheit abgelegt und dann von der Zentrale abgefragt werden.

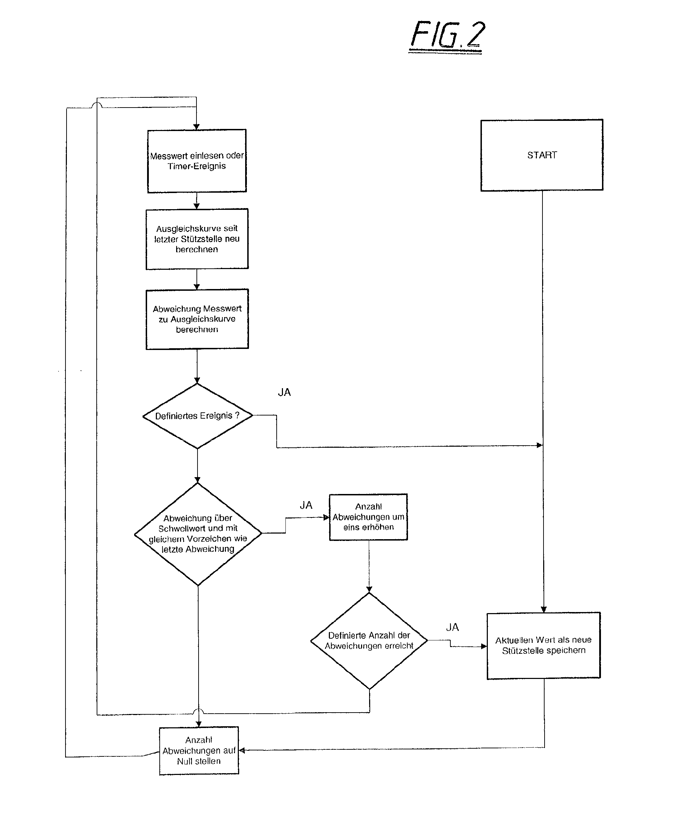

Der Mikroprozessor 4 verarbeitet die vom Tanksensor 8 gelieferten Daten beispielsweise nach dem in Fig. 2 gezeigten Algorithmus, bei dem, wie schon beschrieben wurde, aus aufeinanderfolgenden Daten zunächst ein voraussichtlicher Wert für das nächste Meßsignal vorgegeben und unter Einhaltung von Toleranzbedingungen mit dem nächsten Meßsignal verglichen wird, wobei innerhalb der Toleranz bzw. des Schwellwertes liegende Abweichungen gezählt und dann, wenn die Anzahl der Abweichungen in einer Richtung die Abweichungen in der anderen Richtung um einen bestimmten definierten Wert übersteigen, aus der letzten gültigen Messung und dem letzten neuen Meßwert einen neuen Verlauf, d. h. voraussichtlichen Wert für die nächste Messung berechnen. Zusätzlich ist eine Schleife vorgesehen, die bei einem definierten Ereignis, das in erster Linie die momentane Betankung, das Ein- oder Abschalten des Motors, eine Entnahme von Treibstoff aus dem Tank usw. sein kann, eine Speicherung des momentanen Füllstandsmeßwertes einleitet. Dieses definierte Ereignis wird beispielsweise von den anderen Sensoren 9 erfaßt. Nach dem Algorithmus werden die erhaltenen Rohdaten über die Tankfüllung, also die sich aus den von den Tanksensoren 8 gelieferten, aufbereiteten Rohdaten in einem Zwischenspeicher 5 gemeinsam mit der Momentanzeit der Speicherung abgelegt. Über die Einheit 6 kann noch optional eine weitere Datenkomprimierung und/oder eine Verschlüsselung vorgenommen werden. Damit ist im Speicher 5 über eine gesamte Betriebsperiode ein Datensatz abgelegt, der bei der vorzunehmenden Auswertung Auskunft über Tankbefüllungen bzw. Entnahmen aus dem Tank, Verlauf der Tankentleerung beim Betrieb (Verbrauch) und weitere über die Sensoren zur Speicherung eingeleitete Daten gibt. Es wurde schon erwähnt, daß Beeinflussungen der Speicherung auch durch die Signale von Neigungssensoren möglich sind bzw. aus den Signalen der Neigungssensoren abgeleitete Speicherdaten parallel zu den Füllstands-Rohdaten gespeichert werden können.

Die Auswertungseinheit 2 umfaßt eine Stufe 10 zur optionalen Datendekomprimierung bzw. -verschlüsselung und an diese angeschlossen eine Eingangsschnittstelle 11. Im wesentlichen ist die Auswertungseinheit 2 in einem größeren Computer integriert. Bei der in der allgemeinen Beschreibung schon ausführlicher erläuterten Erfassung der Korrekturdaten zu den von den Tanksensoren 8 gelieferten Daten wird die Einheit 12 aktiviert, die zunächst für jedes Fahrzeug bzw. zumindest für ein Fahrzeug einer gleichen Fahrzeuggruppe Eichtabellen und damit Korrekturdaten für die Rohdaten aus der Tanksensorenabfrage ermittelt. Diese Ermittlung bzw. Abspeicherung erfolgt vorzugsweise vor der ersten Inbetriebnahme des jeweiligen Fahrzeuges, kann aber auch unter Einhaltung der Eichungsbedingungen erst vor der Auslesung der in 5 gespeicherten Daten, also dann, wenn das Fahrzeug seinen Zielort erreicht hat, vorgenommen werden. In einer weiteren Stufe 13 werden die Treibstoffvolumenswerte aus den Füllstandswerten mit Hilfe der Korrekturwerte bzw. der abgespeicherten Eichtabellen berechnet, wobei nach einer Stufe 14 auch Kompensationen aufgrund gespeicherter Temperatur-, Druck- oder Neigungswerte erfolgen können. Schließlich werden die ermittelten Daten oder der für die Auswertung interessante Auszug daraus in der Datenbank 15 abgelegt und können aus dieser über eine Auswertungssoftware 16 noch einmal aufbereitet und nach verschiedenen Kriterien überprüft werden, wobei u. a. Betankungszeiten und Betankungsmengen unzulässige Kraftstoffentnahmen aus demTank, Standzeiten usw. berücksichtigt werden. Da im Datenspeicher 5 der Erfassungseinheit im wesentlichen nur Meßpunkte mit der jeweiligen Zeit des Ereignisses oder der Messung aufgezeichnet werden, kann in der Auswertungseinheit 2 auch eine Dekomprimierung der Daten im Sinne der Erfassung und linearen Anzeige der Gesamtüberwachungszeit erfolgen. Über die Schnittstelle ist noch eine Einheit 17 zum Softwareupdate und zur Parametrierung für Datenspeichergeräte angeschlossen.

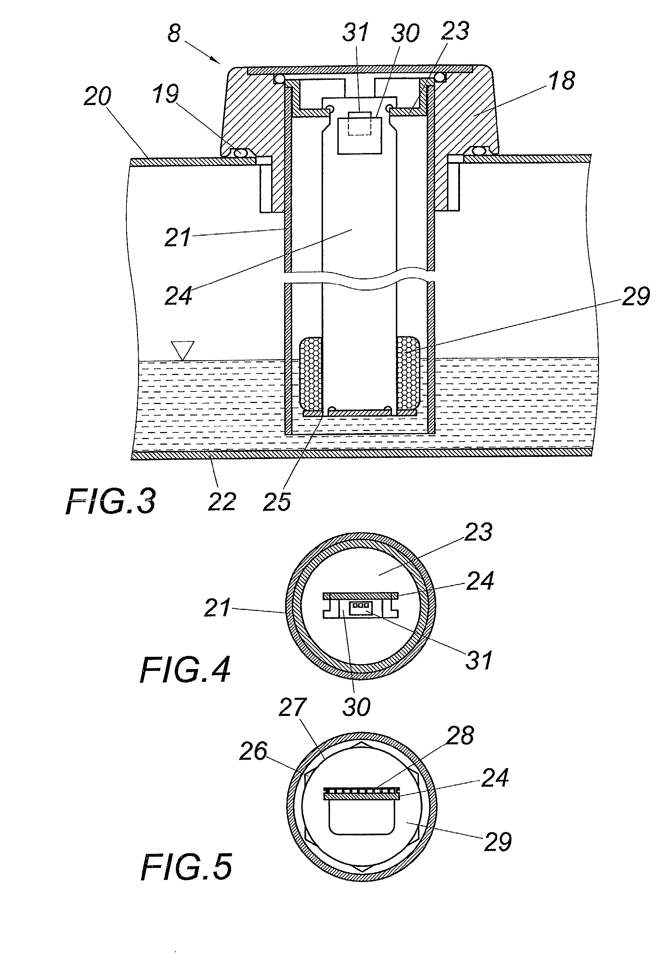

Der Füllstandsfühler 8 nach den Fig. 3 - 5 besitzt einen Sensorkopf 18, der nach Art eines üblichen Tankverschlusses unter Zwischenschaltung einer Dichtung 19 in einer Öffnung der oberen Tankwand 20 mit einer Bajonettverschraubung befestigbar ist. Der Sensorkopf 18 kann Teile der Schaltelemente nach 1 bzw. 2 (Fig. 1) enthalten. Er ist überdies mit einem Tauchrohr 21 verbunden, das mit kurzem Abstand vom Boden 22 des Tanks mündet, weil die normale Treibstoffentnahmeleitung ebenfalls auch von einem über diesem Boden liegenden Bereich ausgeht und Schlammansaugungen vermieden werden sollen. In die obere Öffnung des Tauchrohres 21 ist ein becherförmiger Halterungsteil 23 eingesetzt, der das obere Ende einer eine Maßstabverkörperung darstellenden Sensorplatine 24 hält. Das untere Ende dieser Sensorplatine 24 ist mit einer Stützplatte 25 verbunden, die sich mit Vorsprüngen 26 unter Freilassung von Flüssigkeitsdurchtrittsspalten 27 im Tauchrohr 21 abstützt. Die Sensorplatine enthält zusätzlich Temperaturfühler und ist mit einem eine Meßteilung darstellenden, geätzten einschrittigen Bitmuster im Gray Code versehen, das durch Kontakte 28 oder auch Kontaktrollen in deren Eingriffsbereich zur Erzeugung der Meßsignale kurzgeschlossen werden kann. Mit Umfangsspiel von der Rohrinnenseite ist ein die Kontakte 28 tragender Schwimmer 29 angeordnet, der sich auf plangefrästen Seitenflanken der Sensorplatine 24 führt und dessen Relativlage zu dieser Platine den Momentanmeßwert bestimmt. Elektronische Teilkomponenten und Anschlußstecker 30 sind an der Rückseite der Sensoreinheit 24, also der Platine, angeordnet. Ein Kabelstecker 31 ist ebenfalls vorhanden. Der Temperaturfühler ist auf der Platine 24 in geringem Abstand vom Behälterboden 22 vorgesehen, aber in der Zeichnung nicht dargestellt. Der Teil 23 besitzt einen T-förmigen Ausschnitt, durch den hindurch das entsprechend geformte Ende der Platine 24 hindurchgesteckt werden kann, das nach entsprechender Verdrehung mittels des Kabelsteckers 31, der in das Steckergehäuse 30 eingeführt wird, in Axialrichtung festgelegt wurde. Damit ergibt sich eine spannungsfreie Befestigung der Platine 24. Aus der Zeichnung ist ersichtlich, daß das obere Ende des Meßbereiches über der Oberkante der oberen Behälterwandung 20 liegt.

## Patentansprüche

1. System zur Überwachung von Fahrzeugtanks für flüssigen Kraftstoff, bestehend aus einer Erfassungseinheit (1) an jedem dem System zugehörigen Fahrzeug und wenigstens einer gesonderten, insbesondere ortsfesten Auswertungseinheit (2), wobei die Erfassungseinheit Sensoren (8, 9), von denen wenigstens einer ein Füllstandsfühler ist, zur Erzeugung entsprechender Meßsignale, einen Schaltkreis (4) zur Erfassung dieser Meßsignale, der Zeitsignale einer Zeitbasis und gegebenenfalls zusätzlicher, den momentanen Betriebszustand charakterisierender Signale und einen vom Schaltkreis beaufschlagten Speicher (5) zur zeit- und/oder ereignisabhängigen Speicherung der aus den Meß- bzw. Eingangssignalen erzeugten Daten sowie eine Ausgabeschnittstelle (3) umfaßt und die Auswertungseinheit (2) über eine zum Zugriff für die Schnittstelle berechtigte Ausleseeinheit für den Speicher (5, 6) die Daten erfaßt und nach entsprechenden Programmen auswertet, um z. B. Verbrauch über definierte Zeiträume, Nachfüii- oder Entnahmemengen, Zeitpunkt der Betankung oder Entnahme, Standzeiten des Fahrzeuges, Betriebszeiten im Leerlauf usw. festzustellen und zu dokumentieren, **dadurch gekennzeichnet, daß** die Erfassungseinheit (1) mit den Sensoren (8, 9), von denen vorzugsweise wenigstens der Füllstandsfühler (8) ein Sensor mit Digitalausgang ist, ein autarkes System mit Eigenversorgung bildet und der Schaltkreis (4 - 7) aus den von den Sensoren (8, 9) erfaßten Signalen Rohdaten formt und der Speicherung zuführt, wobei diesen gespeicherten Rohdaten zum Erhalt der tatsächlichen Meßwerte zuzuordnende Korrekturdaten in einem Eichvorgang unter gemessener, insbesondere stufenweiser Befüllung bzw. Entleerung des Tankes mit bekannten Flüssigkeitsmengen erzeugt und in einem Korrekturspeicher (12) zur ausschließlichen Verwendung bei der Auswertung festgehalten werden.

2. System nach Anspruch 1, **dadurch gekennzeichnet, daß** für hinsichtlich der Tanks idente Fahrzeuge gemeinsame, für unterschiedliche Fahrzeuge aber gesonderte Speicherplätze (12) für die Korrekturdaten in der Auswertungseinheit (2) vorgesehen sind.

3. System nach Anspruch 1, **dadurch gekennzeichnet, daß** der Korrekturdatenspeicher in die Erfassungseinheit (1) integriert und ausschließlich über die Schnittstelle (3) durch eine berechtigte Auswertungseinheit (2) gemeinsam mit den Rohdaten ablesbar ist.

4. System nach Anspruch 1, **dadurch gekennzeichnet, daß** die Meßstrecke des Füllstandsfühlers (8) wenigstens in ihrem oberen Bereich innerhalb eines Tauchrohres (21) vorgesehen ist, das oben über die höchste Füllhöhe (20) aus dem Tank herausragt.

5. System nach einem der Ansprüche 1 bis 4, **dadurch gekennzeichnet, daß** der Füllstandsfühler (8) eine digital ablesbare Maßstabverkörper (24) aufweist, entlang der eine Abtasteinheit (28) über einen Schwimmer (29) verstellbar ist.

6. System nach den Ansprüchen 4 und 5, **dadurch gekennzeichnet, daß** der Schwimmer (29) an den Seitenflanken der eine flache Platine bildenden Maßstabverkörperung (24) geführt ist.

7. System nach einem der Ansprüche 4 - 6, **dadurch gekennzeichnet, daß** die Maßstabverkörperung als Sensorplatine (24) mit einschrittigem, z. B. im Gray Code geätzten Bitmuster, ausgebildet ist und die Abtsteinheit (28) das Bitmuster im Eingriffsbereich kurzschließende Kontaktelemente, z. B. Kontaktfedern oder Kontaktrollen, trägt.

8. System nach einem der Ansprüche 5 bis 7, **dadurch gekennzeichnet, daß** die Sensorplatine (24) zusätzlich mit einem oder mehreren Temperaturfühlern ausgestattet ist.

9. System nach einem der Ansprüche 1 bis 8, **dadurch gekennzeichnet, daß** das Tauchrohr (21) an einem z. B. nach Art eines Tankveschlusses ausgebildeten, an einem angepaßten Anschluß des Tanks anbringbaren Haltekopf (18) befestigt ist, an dem auch das obere Ende der die Maßstabverkörperung aufweisenden Sensorplatine (24) gehalten ist, wobei sich das untere Ende dieser Platine über den Flüssigkeitdurchtritts zulassende Distanzstücke (25) innen im Tauchrohr (21) abstützt.

10. Verfahren zur Gewinnung der Speicherdaten aus den Eingangssignalen bei einem System nach einem der Ansprüche 1 bis 9, **dadurch gekennzeichnet, daß** bei der periodischen Erfassung jeweils die Daten zweier aufeinanderfolgender Meßwerte zeitabhängig gespeichert, aus deren Vergleich unter Annahme eines linearen Verlaufes des Zustandes bei gleichem bzw. der Zustandsänderung bei unterschiedlichen Meßsignalen ein voraussichtlicher Wert für die nächsten Meßsignale vorgegeben und dieser Wert unter Einhaltung von Toleranzbedingungen mit den nächsten Meßsignalen verglichen wird, wobei nur bei Abweichungen über die zulässigen Toleranzen der abweichende Meßwert gespeichert und aus ihm und dem vorhergehenden Speicherwert neuerlich der voraussichtliche Wert für die nächsten Meßsignale ermittelt und vorgegeben wird.

11. Verfahren nach Anspruch 10, **dadurch gekennzeichnet, daß** bei den die Toleranzbedingungen erfüllenden Meßwerte eine gesonderte Zählung der Anzahl der jeweils nach einander und wiederholt über und der unter dem vorgegebenen Wert liegenden Meßwerte vorgenommen wird und dann, wenn die Differenz dieser Zählwerte einen vorgegebenen Wert übersteigt, der letzte dieser Meßwerte als neuer Speicherwert eingeführt wird.

12. Verfahren zur Gewinnung der Korrekturdaten bei einem System nach einem der Ansprüche 1 bis 3, **dadurch gekennzeichnet, daß** für den Eichvorgang auch bei unterschiedlichen Tanks unter gleichbleibenden, definierten Bedingungen ein ebenfalls einheitlich definierter Betankungsablauf vorgenommen und die individuellen Korrekturdaten dabei automatisiert berechnet werden.

13. Verfahren nach Anspruch 12, **dadurch gekennzeichnet, daß** bei Anordnung des Füllstandsfühlers (8) außerhalb der Schwerachse bzw. -achsen des Tanks bei definierten Tankinhalten unterschiedliche Neigungen des Fahrzeuges eingestellt und mit wenigstens einem Neigungssensor in Zuordnung zu den auftretenden Änderungen der Signale des Füllstandsfühlers (8) erfaßt werden und daß beim Überwachungsbetrieb die Signale des Neigungssensors zusätzlich für die Abfrage bei der Auswertung gespeichert oder unmittelbar über den Schaltkreis gegebenenfalls unter zusätzlicher Berücksichtigung der Signale weiterer Zustandsfühler, z. B. von Temperatur- oder Druckfühlern bei der Bildung der Rohdaten für die Speicherung eingesetzt werden.
